# EUROPÄISCHE PATENTSCHRIFT

(11) **EP 2 593 342 B1**
(45) Veröffentlichungstag und Bekanntmachung des Hinweises auf die Patenterteilung: **20.04.2016**
(21) Anmeldenummer: 11735996.8
(22) Anmeldetag: 15.07.2011
(51) Int. Cl.: B60T 11/16, B60T 13/52, B60T 7/04, B60Q 1/44

(54) **SENSORBAUGRUPPE FÜR EINEN HAUPTZYLINDER**
SENSOR ASSEMBLY FOR A MASTER CYLINDRE
BLOC DÉTECTEUR POUR UN MAÎTRE-CYLINDRE

(30) Priorität: 16.07.2010 DE 102010027308
(43) Veröffentlichungstag der Anmeldung: 22.05.2013
(73) Patentinhaber: Lucas Automotive GmbH, 56070 Koblenz (DE)
(72) Erfinder: NAETHER, Niko, 56355 Nastaetten (DE); BARON, Thomas, 53518 Leimbach (DE); SCHAUST, Karl-Heinz, 56133 Fachbach (DE); ULLMER, Klaus, 56073 Koblenz (DE); KNECHTGES, Josef, 56727 Mayen (DE)
(74) Vertreter: Röthinger, Rainer
(86) Internationale Anmeldenummer: PCT/EP2011/003549
(87) Internationale Veröffentlichungsnummer: WO 2012/007176

(56) Entgegenhaltungen:
- EP-A1- 0 706 924
- DE-A1-102004 013 191
- US-B1- 6 253 656

## Beschreibung

### Technisches Gebiet

Die vorliegende Offenbarung betrifft allgemein das Gebiet der Kraftfahrzeug-Bremsanlagen. Genauer gesagt wird eine Sensorbaugruppe zur Verwendung mit einem Hauptzylinder einer Bremsanlage beschrieben.

### Hintergrund

Unterdruck-Bremskraftverstärker werden in Kraftfahrzeugen eingesetzt, um die vom Fahrer an einem Bremspedal aufgebrachte Fußkraft zu verstärken. Ein herkömmlicher Unterdruck-Bremskraftverstärker besitzt eine Unterdruckkammer sowie eine Arbeitskammer, die durch einen als Membran ausgebildeten Kolben voneinander getrennt sind. Die Membran wiederum ist kraftübertragend mit einem eingangsseitigen Betätigungselement eines Hauptzylinders gekoppelt, auf welches auch die vom Fahrer aufgebrachte Fußkraft einwirkt.

In der Unterdruckkammer wird während des Fahrbetriebs ständig ein Unterdruck aufrechterhalten, während die Arbeitskammer wahlweise mit der Unterdruckkammer oder mit Atmosphärendruck verbunden werden kann. Solange die beiden Kammern miteinander verbunden sind, herrscht in beiden Kammern der gleiche Druck, und die Membran befindet sich in ihrer Ausgangsstellung. Im Rahmen eines Bremsvorgangs wird die Arbeitskammer von der Unterdruckkammer fluidisch getrennt und die Arbeitskammer darüber hinaus mit Atmosphärendruck verbunden. Der daraus resultierende Druckanstieg in der Arbeitskammer führt zu einer Druckdifferenz an der Membran. Diese Druckdifferenz wiederum bewirkt eine Verschiebung der Membran in Richtung der Unterdruckkammer und damit eine Verstärkungskraft am Betätigungselement des Hauptzylinders.

Zur Beurteilung der Leistungsfähigkeit eines Unterdruck-Bremskraftverstärkers ist es wünschenswert, den Druck in der Unterdruckkammer sensorisch zu überwachen. Bei bisherigen Überwachungslösungen, wie sie insbesondere in der EP 0 706 924 A1 sowie in der US 6,253,656 B1 offenbart sind, wird zur Ermittlung des Luftdrucks ein Unterdrucksensor am Bremskraftverstärker angebracht. Fällt der Bremskraftverstärker jedoch aus und muss ausgetauscht werden, erfordert dies einen Austausch auch des kostspieligen Unterdrucksensors. Alternativ hierzu kann der Unterdrucksensor vom defekten Bremskraftverstärker demontiert und am neuen Bremskraftverstärker anmontiert werden, was jedoch mit einem hohen Zeitaufwand einhergeht.

Zur Vermeidung dieser Nachteile wird in der DE 10 2004 013 191 A vorgeschlagen, im Hauptzylinder einen mit der Unterdruckkammer des Bremskraftverstärkers kommunizierenden Unterdruckbereich vorzusehen und den Unterdrucksensor in diesem Unterdruckbereich des Hauptzylinders anzuordnen. Eine besondere Ausgestaltung sieht vor, den Unterdrucksensor mit einem Positionssensor eines Bremslichtschalters in einer Sensorbaugruppe zu integrieren und die gesamte Sensorbaugruppe im Unterdruckbereich des Hauptzylinders vorzusehen. Die Sensorbaugruppe umfasst dabei ein fingerartiges Trägerelement, an dessen Spitze der Unterdrucksensor sowie der Positionssensor aufgenommen sind. Zur Positionierung der Sensoren im Unterdruckbereich des Hauptzylinders wird der Träger mit den vorderseitig aufgenommenen Sensoren durch einen im Hauptzylinder ausgebildeten Kanal geführt, der in den Unterdruckbereich mündet.

### Kurzer Abriss

Der Erfindung liegt die Aufgabe zugrunde, ein alternatives und insbesondere verbessertes Montagekonzept für eine Hauptzylinder-Sensorbaugruppe anzugeben.

Diese Aufgabe wird gelöst durch eine Sensorbaugruppe zur Verwendung mit einem Hauptzylinder, wobei der Hauptzylinder ein eingangsseitiges Betätigungselement und einen Unterdruckbereich zur Kommunikation mit einem Unterdruck-Bremskraftverstärker aufweist. Die Sensorbaugruppe umfasst einen Unterdrucksensor zur Erfassung eines Unterdrucks im Unterdruckbereich des Hauptzylinders, wenigstens einen weiteren Sensor zur Erfassung eines mit dem Betätigungselement des Hauptzylinders starr gekoppelten Signalgebers sowie ein den Unterdrucksensor und den wenigstens einen weiteren Sensor aufnehmendes Gehäuse. Das Gehäuse besitzt eine Gehäuseöffnung, die eine Kommunikation des Unterdrucksensors mit dem Unterdruckbereich des Hauptzylinders gestattet, und eine Befestigungsanordnung zur Montage des Gehäuses außenseitig am Hauptzylinder.

Die Befestigungsanordnung kann Ausnehmungen (zum Beispiel Bohrungen) zur Aufnahme von Schrauben oder anderen Befestigungselementen umfassen, mit denen das Gehäuse außenseitig am Hauptzylinder montiert wird. Alternativ hierzu kann die Befestigungsanordnung auch ein am Gehäuse angebrachtes Gewinde umfassen, um das Gehäuse in den Hauptzylinder einzuschrauben. Eine weitere Realisierung der Befestigungsanordnung umfasst eine Gehäuseformgebung, die es ermöglicht, das Gehäuse mittels eines Presssitzes am Hauptzylinder zu montieren.

Das Gehäuse kann den Unterdrucksensor und den wenigstens einen weiteren Sensor auf einer oder mehreren Seiten umgeben. So kann das Gehäuse die Sensoren wenigstens auf einer Oberseite umgeben. Im einfachsten Fall wird das Gehäuse damit von einem plattenförmigen Element gebildet, welches beispielsweise eine Ausnehmung im Hauptzylinder abdeckt. Gemäß einer weiteren Ausgestaltung umgibt das Gehäuse die Sensoren zumindest seitlich und auf einer Oberseite. Ferner ist es denkbar, dass das Gehäuse die Sensoren zumindest bereichsweise auf einer an den Hauptzylinder angrenzenden Unterseite umgibt.

Die Gehäuseöffnung kann an einer an den Hauptzylinder angrenzenden Unterseite des Gehäuses ausgebildet sein. Es wäre jedoch auch denkbar, die Gehäuseöffnung seitlich oder an einer anderen Stelle des Gehäuses vorzusehen. Gemäß einer Weiterbildung umfasst die Sensorbaugruppe ein Dichtelement zum unterdruckdichten Abdichten der Gehäuseöffnung gegenüber dem Hauptzylinder und insbesondere gegenüber dessen Unterdruckbereich. Das Dichtelement kann beispielsweise als ein die Gehäuseöffnung umgebender Dichtring ausgebildet sein. Das Dichtelement zum Abdichten der Gehäuseöffnung kann auch am Hauptzylinder ausgebildet sein oder aber lose zwischen Hauptzylinder und Sensorbaugruppe vorgesehen werden.

Für den Unterdrucksensor und den wenigstens einen weiteren Sensor kann ein gemeinsamer elektrischer Anschluss vorhanden sein. Der gemeinsame elektrische Anschluss kann (beispielsweise als Steckkontakt) am Gehäuse ausgebildet sein. Der Unterdrucksensor und der wenigstens eine weitere Sensor können gemeinsam auf einer im Gehäuse aufgenommenen Leiterplatte angeordnet werden. Die Leiterplatte kann eine Kontaktierung der Sensoren oder einer hierfür vorgesehenen Signalaufbereitungsschaltung über den gemeinsamen elektrischen Anschluss ermöglichen.

Der wenigstens eine weitere Sensor zur Erfassung des mit dem Betätigungselement gekoppelten Signalgebers kann ein Wegsensor zur Erfassung eines vom Betätigungselement zurückgelegten Wegs sein. Ferner kann der wenigstens eine weitere Sensor ein Positionssensor zur Erfassung des Erreichens einer vorgegebenen Position des Betätigungselements sein. Gemäß einer optionalen Weiterbildung ist der Positionssensor Teil eines Bremslichtschalters. Der Wegsensor kann ein analoges Signal bereitstellen und beispielsweise als kontinuierlicher (z.B. linearer) Hall-Sensor ausgebildet sein. Ferner kann der Positionssensor ein binäres Signal bereitstellen und beispielsweise als binärer Hall-Sensor mit zwei Schaltzuständen ausgeführt werden.

Gemäß einer Realisierungsform umfasst die Sensorbaugruppe neben dem Unterdrucksensor sowohl den Wegsensor als auch den Positionssensor. Demgemäss sind wenigstens drei Sensoren vorgesehen. Es sind aber auch Realisierungen denkbar, bei denen sowohl ein Wegsensor als auch ein Positionssensor aber kein Unterdrucksensor vorgesehen sind.

Es kann ferner eine Schaltungseinrichtung vorgesehen sein, welche zur Kalibrierung des Wegsensors auf der Grundlage eines Ausgangssignals des Positionssensors ausgebildet ist. Die Schaltungseinrichtung kann Teil der Sensorbaugruppe sein oder aber außerhalb der Sensorbaugruppe (auch beispielsweise in einem Steuergerät) integriert sein.

Gemäß einer Realisierung weisen der Wegsensor und der Positionssensor einen Abstand voneinander auf. Dieser Abstand kann in Abhängigkeit einer Längenausdehnung des Signalgebers gewählt sein. Sowohl der Abstand zwischen dem Wegsensor und dem Positionssensor als auch die Längenausdehnung des Signalgebers können in einer Bewegungsrichtung des Betätigungselements oder des Signalgebers definiert sein.

Der Abstand zwischen dem Wegsensor und dem Positionssensor kann gemäß einer Variante ungefähr der halben Länge des Signalgebers entsprechen. Ein derartiger Abstand ist beispielsweise bei einem elektromagnetische Strahlung aussendenden Signalgeber (z.B. einem Magnetelement) vorteilhaft. Je nach Realisierung der Sensoren sowie des Signalgebers kann jedoch auch ein anderer Abstand zwischen dem Wegsensor und dem Positionssensor gewählt werden.

Der Wegsensor und der Positionssensor können dazu ausgebildet sein, elektromagnetische Strahlung, wie beispielsweise eine magnetische Flussdichte, zu erfassen. Bei einer solchen Implementierung kann der Wegsensor derart platziert sein, dass der Wegsensor in einer Ausgangsstellung des Betätigungselements ungefähr in einem Bereich eines (auf den Signalgeber zurückgehenden) Flussdichtemaximums liegt. Umfasst die Sensorbaugruppe einen weiteren, zweiten Wegsensor, kann der zweite Wegsensor derart platziert sein, dass er in einer Ausgangsstellung des Betätigungselements ungefähr in einem Bereich eines weiteren Flussdichtemaximums liegt. Ferner kann der Positionssensor derart platziert sein, dass der Positionssensor in einer Ausgangsstellung des Betätigungselements ungefähr in einem Bereich zwischen zwei Flussdichtemaxima liegt.

Mittels des Kalibrierungskonzepts lässt sich die Genauigkeit der Wegerfassung derart erhöhen, dass ein Ausgangssignal des Wegsensors auch zur Pedalwegerfassung herangezogen werden kann (ein zusätzlicher Pedalwegsensor kann damit entfallen). Die Pedalwegerfassung ist eine wesentliche Voraussetzung für die Implementierung einer elektrohydraulischen Bremsanlage, einer regenerativen Bremsanlage ("Hybrid-Bremsanlage") oder ähnlicher Konzepte. Daher kann die hier vorgestellte Sensorbaugruppe auch im Zusammenhang mit solchen Bremsanlagen zum Einsatz gelangen.

Der Signalgeber kann auf unterschiedliche Art und Weise starr mit dem Betätigungselement gekoppelt werden. Im einfachsten Fall ist der Signalgeber unmittelbar mit dem Betätigungselement gekoppelt oder sogar mit dem Betätigungselement identisch. Alternativ hierzu kann der Signalgeber auch an einer starr mit dem Betätigungselement gekoppelten Struktur vorgesehen werden. Bei dieser Struktur kann es sich beispielsweise um einen mit dem Betätigungselement gekoppelten Stößel handeln, der den Signalgeber trägt. In diesem Fall kann die Sensorbaugruppe ferner einen Kanal (z.B. innerhalb einer Kartusche) zur Aufnahme des Stößels besitzen. Gemäß dieser Ausgestaltung kann die Gehäuseöffnung derart angeordnet sein, dass der Unterdrucksensor über den Kanal mit dem Unterdruckbereich des Hauptzylinders kommuniziert. Die Gehäuseöffnung kann also beispielsweise von einer (in Bezug auf den Stößel) eingangsseitigen Öffnung des Kanals gebildet sein oder aber innerhalb des Kanals vorgesehen werden.

Ebenfalls vorgeschlagen wird eine Hauptzylinderbaugruppe mit einem Hauptzylinder und der hier vorgestellten Sensorbaugruppe. Der Hauptzylinder umfasst das eingangsseitige Betätigungselement und den Unterdruckbereich zur Kommunikation mit einem Unterdruck-Bremskraftverstärker. Die Hauptzylinderbaugruppe kann ferner den Unterdruck-Bremskraftverstärker selbst umfassen.

Gemäß einer Weiterbildung umfasst die Hauptzylinderbaugruppe den mit dem Betätigungselement gekoppelten Stößel, welcher den Signalgeber trägt. Ferner kann am Hauptzylinder ein Kanal zur Aufnahme des Stößels ausgebildet sein. Der Kanal kann zum Unterdruckbereich des Hauptzylinders gehören und angeordnet sein, um eine Unterdruckkammer des Unterdruck-Bremskraftverstärkers mit der Gehäuseöffnung zu verbinden. Auf diese Weise wird eine Kommunikation des Unterdrucksensors mit der Unterdruckkammer ermöglicht.

Ferner wird ein Sensorsystem mit einer den Wegsensor und den Positionssensor umfassenden Sensorbaugruppe sowie eine Schaltungseinrichtung, die zur Kalibrierung des Wegsensors auf der Grundlage eines Ausgangssignals des Positionssensors ausgebildet ist, bereitgestellt. Dieses Sensorsystem kann zur Simulation eines Pedalwegsensorsignals auf der Grundlage des Ausgangssignals des Wegsensors verwendet werden.

Eine Verwendung der Sensorbaugruppe kann ferner ein Abgleichen des zurückgelegten Wegs, der vom Wegsensor erfasst wurde, und des Erreichens der vorgegebenen Position, das vom Positionssensor erfasst wurde, umfassen. Ein derartiger Abgleich kann beispielsweise das Kalibrieren (eines Ausgangssignals) des Wegsensors auf der Grundlage eines Ausgangssignals des Positionssensors beinhalten. Das Kalibrieren kann bei Erfassen des Erreichens der vorgegebenen Position (also beispielsweise an einem Schaltpunkt des Positionssensors) erfolgen. Zum Kalibrieren kann bei Erreichen der vorgegebenen Position das Ausgangssignal des Wegsensors auf ein Referenzsignal bezogen werden. In diesem Zusammenhang kann beispielsweise ein Verstärkungsfaktor für das Ausgangssignal des Wegsensors in Übereinstimmung mit dem Referenzsignal eingestellt werden.

Das Ausgangssignal des Positionssensors kann plausibilisiert werden. Dieses Plausibilisieren kann das redundante Auswerten eines anderen, auf einen Bremsvorgang hinweisenden Signals umfassen. Ein solches Signal kann beispielsweise von einem Längsbeschleunigungssensor oder einem Raddrehzahlsensor geliefert werden.

Auf der Grundlage eines Ausgangssignals des Wegsensors können weitere Größen bestimmt werden. Die Bestimmung dieser Größen ist insbesondere bei einer vorhergehenden Kalibrierung des Wegsensors (und gegebenenfalls einer Plausibilisierung dessen Ausgangssignals) besonders genau und zuverlässig. So kann auf der Grundlage eines Ausgangssignals des Wegsensors ein Bremspedalweg und/oder ein Unterdruck in einem Unterdruck-Bremskraftverstärker ermittelt werden. Die jeweilige Ermittlung kann auf der Grundlage einer mathematischen Berechnung (z.B. unter Verwendung eines mathematischen Modells) erfolgen.

### Kurze Beschreibung der Zeichnungen

Weitere Aspekte, Vorteile und Ausgestaltungen der Erfindung ergeben sich aus der nachfolgenden Beschreibung mehrerer Ausführungsbeispiele sowie aus den Figuren. Es zeigt:
- Fig. 1: eine Schnittansicht eines Ausführungsbeispiels einer Hauptzylinderbaugruppe;
- Fig. 2: eine Ausschnittsvergrößerung aus Fig. 1, die ein erstes Ausführungsbeispiel einer Sensorbaugruppe zeigt;
- Fig. 3: ein zweites Ausführungsbeispiel einer Sensorbaugruppe;
- Fig. 4: ein erstes Ausführungsbeispiel einer Signalgeberkartusche für eine Sensorbaugruppe;
- Fig. 5: ein zweites Ausführungsbeispiel einer Signalgeberkartusche für eine Sensorbaugruppe;
- Fig. 6: ein weiteres Ausführungsbeispiel einer Hauptzylinderbaugruppe;
- Fig. 7: noch ein Ausführungsbeispiel einer Hauptzylinderbaugruppe;
- Fig. 8: ein schematisches Diagramm, welches den Verlauf der magnetischen Flussdichte für das Ausführungsbeispiel gemäß Fig. 8 veranschaulicht;
- Fig. 9: ein schematisches Diagramm, welches den Verlauf eines SensorAusgangssignals und die mögliche Wahl von Erfassungsbereichen veranschaulicht;
- Fig. 10: ein schematisches Diagramm, welches ein Kalibrierungskonzept veranschaulicht;
- Fig. 11: ein schematisches Diagramm, welches ein das Kalibrierungskonzept weiter veranschaulicht; und
- Fig. 12: ein schematisches Diagramm, welches die Bestimmung des Bremskraftverstärker-Unterdrucks auf der Grundlage des Bremspedalwegs veranschaulicht.

### Ausführungsbeispiele

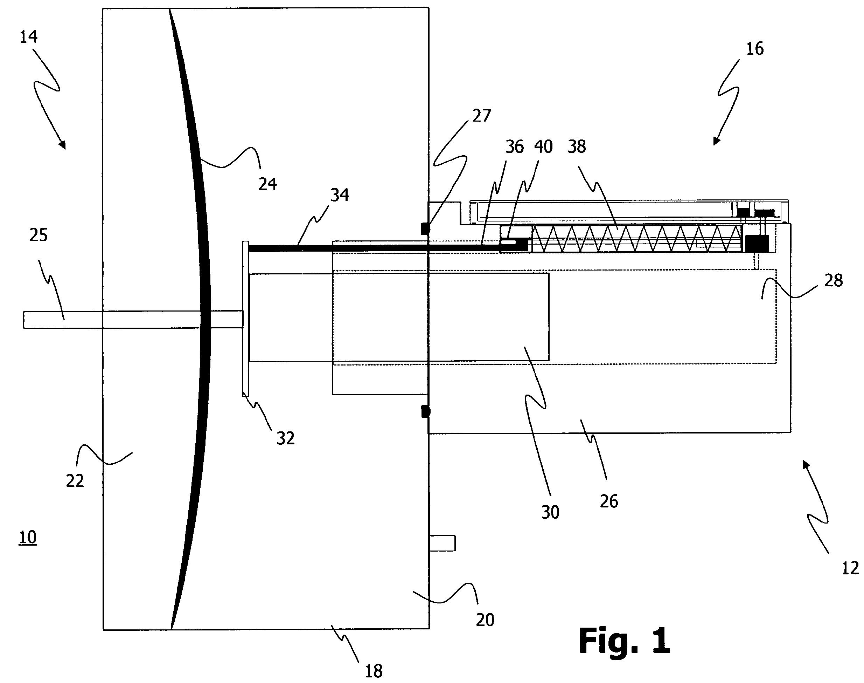

Fig. 1 zeigt ein Ausführungsbeispiel einer allgemein mit 10 bezeichneten Hauptzylinderbaugruppe. Die Hauptzylinderbaugruppe 10 umfasst einen Hauptzylinder 12, einen am Hauptzylinder 12 stirnseitig befestigten Unterdruck-Bremskraftverstärker 14 sowie eine außenseitig am Hauptzylinder 12 montierte Sensorbaugruppe 16.

Der Unterdruck-Bremskraftverstärker 14 umfasst ein Gehäuse 18. Innerhalb des Gehäuses 18 sind eine Unterdruckkammer 20 sowie eine Arbeitskammer 22 ausgebildet. Die Arbeitskammer 22 ist von der Unterdruckkammer 20 mittels einer im Gehäuse 18 nach Art eines Kolbens verschiebbaren Membran 24 getrennt. Die Membran 24 wiederum ist in kraftübertragender Weise mit einer Eingangsstange 25 gekoppelt. Die Eingangsstange 25 wird mittels eines Bremspedals (nicht dargestellt) betätigt.

Der Hauptzylinder 12 umfasst ein Gehäuse 26, welches über ein Dichtelement in Gestalt eines O-Rings 27 am Gehäuse 18 des Bremskraftverstärkers 14 befestigt ist. Im Gehäuse 26 ist eine Hydraulikkammer 28 ausgebildet. Innerhalb der Hydraulikkammer 28 ist ein mit der Eingangsstange 25 starr gekoppelter Betätigungskolben (Primärkolben) 30 verschieblich geführt. Mittels des Betätigungskolbens 30 kann innerhalb der Hydraulikkammer 28 ein Hydraulikdruck zur Betätigung von Radbremsen (nicht dargestellt) aufgebaut werden. Der Bremsdruckaufbau in der Hydraulikkammer 28 erfolgt durch Verschieben des Betätigungskolbens 30 in Fig. 1 nach rechts. Das Verschieben des Betätigungskolbens 30 erfolgt mittels der mit dem Bremspedal gekoppelten Eingangsstange 25 sowie der Membran 24. Auf den Betätigungskolben 30 wirkt hierbei zum einen die vom Fahrer in das Bremspedal eingeleitete Fußkraft und zum anderen die vom Bremskraftverstärker 14 (auf herkömmliche Weise) erzeugte Verstärkungskraft.

Wie aus Fig. 1 ersichtlich, ist am Betätigungskolben 30 an seiner der Eingangsstange 25 zugewandten Stirnfläche ein Tellerelement 32 befestigt. Das Tellerelement 32 ist konzentrisch zum Betätigungskolben 30 angeordnet und ragt in radialer Richtung über den Betätigungskolben 30 hinaus. In der Nähe des Außenumfangs des Tellerelements 32 ist ein sich parallel zum Betätigungskolben 30 in Richtung des Hauptzylindergehäuses 26 erstreckender Stößel 34 starr befestigt. Der Stößel 34 ist als stangenartiges Element ausgebildet und erstreckt sich über einen im Gehäuse 26 ausgebildeten Kanal 36 in eine ebenfalls im Gehäuse 26 ausgebildete Ausnehmung 38. An seinem dem Tellerelement 32 abgewandten Ende trägt der Stößel 34 ein Signalgeberelement 40 zur Erfassung mittels der Sensorbaugruppe 16. Aufgrund der starren Kopplung des Stößels 34 mit dem Betätigungskolben 30 überträgt sich jegliche translatorische Bewegung des Betätigungskolbens 30 unmittelbar auf das Signalgeberelement 40. Aus diesem Grund ermöglicht eine Erfassung einer Bewegung oder Position des Signalgeberelements 40 mittels der Sensorbaugruppe 16 eine Aussage über eine Bewegung oder Position des Betätigungskolbens 30.

Wie in Fig. 1 gezeigt, sind die Eingangsstange 25, das Tellerelement 32, der Stößel 34 sowie der Betätigungskolben 30 zumindest teilweise in der Unterdruckkammer 20 des Bremskraftverstärkers 14 angeordnet. Ferner ist über den mit der Unterdruckkammer 20 kommunizierenden Kanal 36 sowie die mit dem Kanal 36 kommunizierende Ausnehmung 38 des Hauptzylindergehäuses 26 ein Unterdruckbereich im Hauptzylinder 12 definiert. Der Stößel 34 mit dem daran angebrachten Signalgeberelement 40 taucht in diesen Unterdruckbereich ein.

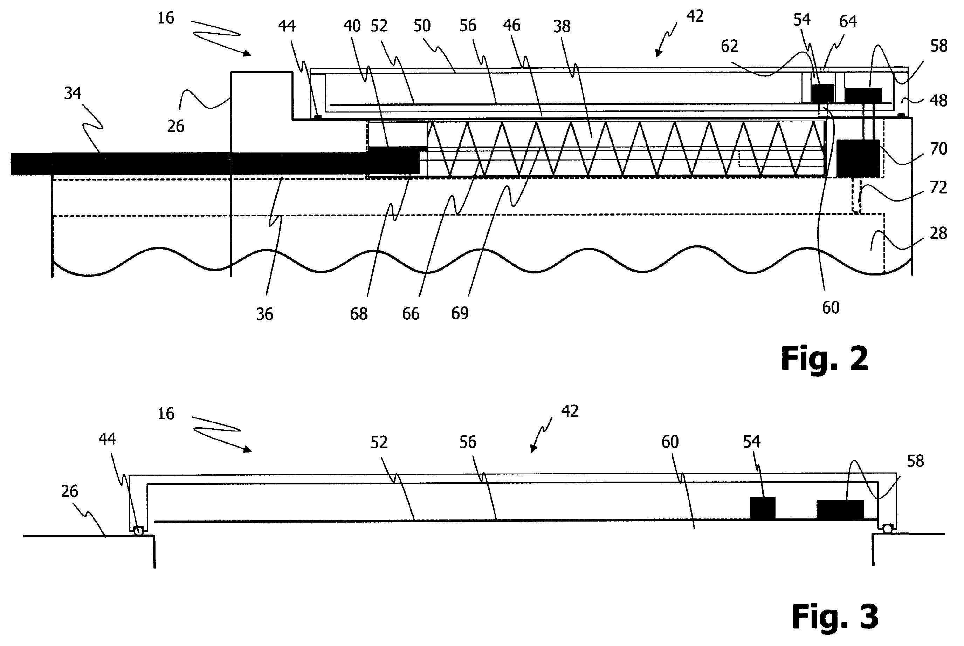

Um einen Unterdruckverlust in der Unterdruckkammer 20 durch Eintritt von Atmosphärenluft in den Unterdruckbereich des Hauptzylinders 26 zu verhindern, ist die Ausnehmung 38 des Hauptzylindergehäuses 26 unterdruckdicht mittels der Sensorbaugruppe 16 verschlossen. Dieser Sachverhalt sowie die Konfiguration der Sensorbaugruppe 16 wird im Folgenden anhand von Fig. 2 näher erläutert. Fig. 2 zeigt eine Ausschnittsvergrößerung der Fig. 1 im Bereich der Sensorbaugruppe 16.

Wie in Fig. 2 dargestellt, umfasst die Sensorbaugruppe 16 ein Gehäuse 42, welches außenseitig am Gehäuse 26 des Hauptzylinders 12 montiert ist. Die Montage des Gehäuses 42 der Sensorbaugruppe 16 am Hauptzylindergehäuse 26 erfolgt derart, dass die Ausnehmung 38 im Hauptzylindergehäuse 26 unterdruckdicht verschlossen wird. Zu diesem Zweck ist ein Dichtelement 44 um die Ausnehmung 38 herum zwischen dem Gehäuse 42 der Sensorbaugruppe 16 und dem Hauptzylindergehäuse 26 vorgesehen. Auf diese Weise wird verhindert, dass Luft aus der Umgebung über die Ausnehmung 38 und den Kanal 36 im Hauptzylindergehäuse 26 in die Unterdruckkammer 20 des Bremskraftverstärkers 14 eindringt.

Im Ausführungsbeispiel gemäß Fig. 2 ist das Gehäuse 42 der Sensorbaugruppe 16 mittels Schrauben (nicht gezeigt) am Hauptzylindergehäuse 26 befestigt. Aufgrund des im Unterdruckbereich des Hauptzylinders 12 herrschenden Ansaugeffekts kann das Gehäuse 42 aber auch unter Verwendung weniger stabiler Befestigungsanordnungen außenseitig am Hauptzylinder 12 montiert werden. So kämen beispielsweise auch Klapp- oder Rastverbindungen für die Montage des Gehäuses 42 in Frage.

Im Ausführungsbeispiel gemäß Fig. 2 umfasst das Gehäuse 42 ein erstes Gehäuseelement, welches eine Unterseite 46 und Seitenwand 48 des Gehäuses 42 definiert, sowie ein zweites Gehäuseelement, welches als Deckel 50 ausgebildet ist und das erste Gehäuseelement oberseitig verschließt. Im Gehäuse 42 ist eine Leiterplatte 52 (Printed Circuit Board, PCB) aufgenommen. Auf der Leiterplatte 52 sind ein Unterdrucksensor 54, ein linear oder flächig ausgebildeter Wegsensor 56 sowie eine Schaltungseinrichtung 58 montiert.

Der Unterdrucksensor 54 gestattet die Erfassung eines Unterdrucks im Unterdruckbereich des Bremskraftverstärkers 14. Zu diesem Zweck ermöglicht eine in der Unterseite 46 des Gehäuses 42 ausgebildete Öffnung 60 eine Kommunikation des Unterdrucksensors 54 mit der im Hauptzylindergehäuse 26 ausgebildeten Ausnehmung 38 und damit - über den Kanal 36 - mit der Unterdruckkammer 20 des Bremskraftverstärkers 14. Der Unterdrucksensor 54 (bzw. die Leiterplatte 52) verschließt die Gehäuseöffnung 60 unterdruckdicht bezüglich eines Innenraums des Gehäuses 42 der Sensorbaugruppe 16.

Wie in Fig. 2 gezeigt, ist der Unterdrucksensor 54 selbst in einer im Innenraum des Gehäuses 42 ausgebildeten Kammer 64 angeordnet. Der Gehäusedeckel 50 weist im Bereich der Kammer 62 eine Deckelöffnung 64 auf. Aus diesem Grund herrscht im Inneren der Kammer 62 Atmosphärendruck, um eine druckdifferenzbasierte Unterdruckerfassung mittels des Unterdrucksensors 54 zu ermöglichen. Die Kammer 62 selbst ist unterdruckdicht bezüglich des restlichen Innenraums des Gehäuses 42 abgedichtet.

Der Wegsensor 56 ist linear oder flächig auf der Leiterplatte 52 ausgebildet und daher in der Schnittansicht gemäß Fig. 2 nicht unmittelbar erkennbar. Im Ausführungsbeispiel gemäß Fig. 2 ist der Wegsensor 56 als kontinuierlicher bzw. linearer Hall-Sensor zur Erfassung eines vom Betätigungskolben 30 zurückgelegten Wegs ausgelegt. Die Erfassung des vom Betätigungskolben 30 zurückgelegten Wegs erfolgt indirekt über eine Erfassung des zurückgelegten Wegs des starr mit dem Betätigungskolben 30 gekoppelten Signalgeberelements 40. Das Signalgeberelement 40 ist im vorliegenden Ausführungsbeispiel als Dauermagnet realisiert, dessen Magnetfeld mittels des als Hall-Sensor ausgelegten Wegsensors 56 erfasst wird.

Die Schaltungseinrichtung 58 ist elektrisch sowohl mit dem Unterdrucksensor 54 als auch dem Wegsensor 56 gekoppelt und beinhaltet geeignete Signalaufbereitungsschaltungen für die beiden Sensoren 54, 56. In einer Ausführungsform ist die Schaltungseinrichtung 58 als ASIC (Application Specific Integrated Circuit) ausgebildet.

Die Schaltungseinrichtung 58 stellt ihre Ausgangssignale über einen in Fig. 2 nicht dargestellten gemeinsamen elektrischen Anschluss (beispielsweise einen mehrpoligen elektrischen Stecker) einer externen Steuereinheit zur Verfügung. Hinsichtlich der elektrischen Schnittstellen stehen unterschiedliche Konfigurationen zur Verfügung (z.B. CAN, SENT, PSI5, PAS4, PWM, analog, usw.). Bei der externen Steuereinheit kann es sich um ein Steuergerät (Electronic Control Unit, ECU) handeln. Gemäß einer alternativen Ausgestaltung umfasst die Schaltungseinrichtung 58 selbst die erforderlichen Steuergerätfunktionalitäten gemäß dem "Smart Sensor"-Konzept. Die Schaltungseinrichtung 58 kann in diesem Fall (beispielsweise über einen CAN-Bus) an ein übergeordnetes Regelsystem angebunden sein.

Wie in Fig. 2 zu erkennen, ist in der Ausnehmung 38 ein als Schraubenfeder ausgebildetes Federelement 66 angeordnet, welches auf den das Signalgeberelement 40 tragenden Stößel 34 eine Rückstellkraft (in Fig. 2 nach links) ausübt. Mittels des Federelements 66 wird gewährleistet, dass nach Abschluss eines Bremsvorgangs der Stößel 34 mit dem Signalgeberelement 40 stets wieder in seine in Fig. 2 gezeigte Ausgangsstellung zurückkehrt. Das Signalgeberelement 40 ist über einen Schlitten 68 am Stößel 34 montiert. Der Schlitten 68 wiederum ist in einer Nut 69, die in einer Seitenwand der Ausnehmung 38 oder einer separaten Signalgeberkartusche ausgebildet ist, geführt beweglich.

Im Ausführungsbeispiel gemäß Fig. 2 ist in der Ausnehmung 38 des Hauptzylindergehäuses 26 ferner ein Hydraulikdrucksensor 70 vorgesehen. Der Hydraulikdrucksensor 70 ist am Grund der Ausnehmung 38 befestigt und kommuniziert über eine Bohrung 72 mit der Hydraulikkammer 28. Die Bohrung 72 wird mittels des Drucksensors 70 hydraulikdicht bezüglich der Ausnehmung 38 abgedichtet. Wie in Fig. 2 gezeigt, wird der Hydraulikdrucksensor 70 von der Schaltungseinrichtung 58 elektrisch kontaktiert. Ähnlich wie in Bezug auf die Sensoren 54, 56 beschrieben, beinhaltet die Schaltungseinrichtung 58 eine Signalaufbereitungsschaltung auch für den Hydraulikdrucksensor 70 und liefert ein entsprechendes Ausgangssignal, das über den gemeinsamen elektrischen Anschluss abgegriffen werden kann.

In dem in Fig. 2 dargestellten Ausführungsbeispiel der Sensorbaugruppe 16 muss der Innenraum des Gehäuses 42 nicht notwendigerweise vakuumdicht ausgebildet sein. Das unterdruckdichte Verschließen des Unterdruckbereichs des Hauptzylinders 12 erfolgt nämlich über die Gehäuseunterseite 46 in Kombination mit dem umlaufenden Dichtelement 44 zwischen der Gehäuseunterseite 46 und dem Hauptzylindergehäuse 26. Ein Unterdruckleck über die Gehäuseöffnung 60 wird dadurch verhindert, dass die Gehäuseöffnung 60 unterdruckdicht mittels des Unterdrucksensors 54 (bzw. der Leiterplatte 52) verschlossen ist. Fig. 3 zeigt ein zweites Ausführungsbeispiel der Sensorbaugruppe 16, bei dem auch im Innenraum des Gehäuses 42 ein Unterdruck herrscht. Im Folgenden werden ähnliche Elemente mit denselben Bezugszeichen wie im ersten Ausführungsbeispiel versehen.

Bei dem in Fig. 3 dargestellten Ausführungsbeispiel der Sensorbaugruppe 16 ist aufgrund einer anderweitigen Konfiguration des Unterdrucksensors 54 keine druckdifferenzbasierte Unterdruckerfassung erforderlich. Aus diesem Grund kann auch im Innenraum des Gehäuses 42 ein Unterdruck herrschen und die Gehäuseform daher vereinfacht werden. Das Gehäuse 42 umgibt im Ausführungsbeispiel gemäß Fig. 3 den Unterdrucksensor 54 und Wegsensor 56 lediglich seitlich und oben. Der Unterdruckbereich des Hauptzylinders 12 kann sich daher bis in den Innenraum des Gehäuses 42 fortsetzen.

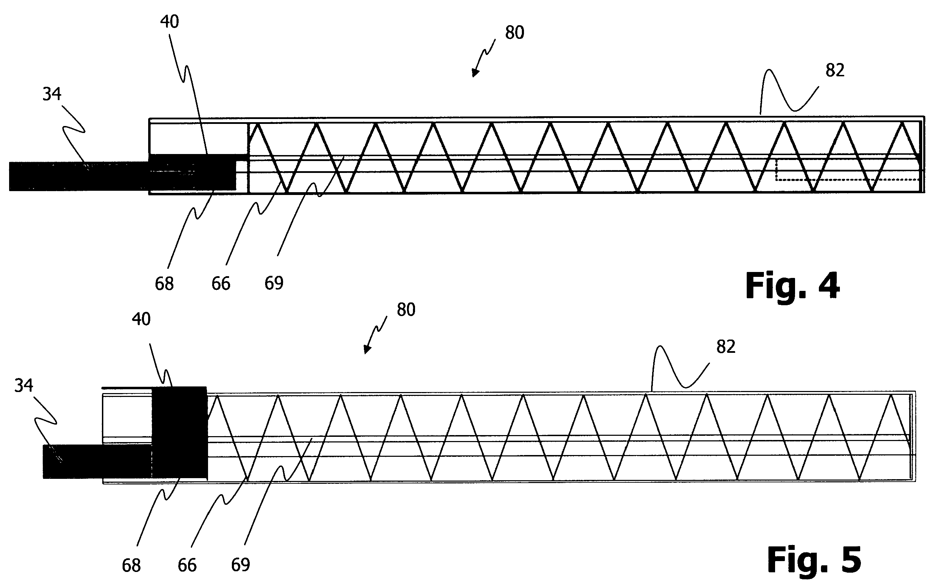

Bei dem Ausführungsbeispiel gemäß Fig. 2 kann das Signalgeberelement 40 in einer Kartusche zum Einsetzen in der Ausnehmung 38 des Hauptzylindergehäuses 26 vorgesehen werden. Fig. 4 zeigt ein Ausführungsbeispiel einer solchen Kartusche 80. Wie in Fig. 4 gezeigt, umfasst die Kartusche 80 ein Kartuschengehäuse 82, das im Inneren einen Kanal für eine translatorische Bewegung des Signalgeberelements 40 definiert. In der Kartusche 80 ist das Signalgeberelement 40 auf dem Schlitten 68 vorkonfiguriert und wird von dem Federelement 66 in seine Ausgangsstellung gemäß Fig. 4 vorgespannt. Innerhalb des Kartuschengehäuses 82 ist die Nut 69 für eine geführte Bewegung des Schlittens 68 ausgebildet. Zur Montage der Kartusche 80 wird diese in einem ersten Schritt in die Ausnehmung 38 des Hauptzylindergehäuses 26 eingesetzt. In einem zweiten Schritt wird der Stößel 34 mit dem Schlitten 68 gekoppelt (zum Beispiel mittels einer Rast-, Steck- oder Bajonett-Verbindung). Das Kartuschengehäuse 82 besitzt eine in Fig. 4 nicht dargestellte Öffnung, um eine Kommunikation des Unterdrucksensors 54 mit dem Innenraum des Kartuschengehäuses 82 und damit dem Unterdruckbereich des Hauptzylinders 12 zu ermöglichen.

Fig. 5 zeigt ein weiteres Ausführungsbeispiel einer Kartusche 80. Während es sich bei dem Signalgeberelement 40 gemäß Fig. 4 um ein Magnetelement zur Erfassung mittels eines Hall-Sensors handelt, zeigt Fig. 5 ein Signalgeberelement 40 in Gestalt eines außerhalb des Kartuschengehäuses 82 liegenden Reflektors, Transducer oder einer ähnlichen Komponente. Der Wegsensor 56 wird entsprechend angepasst.

Die in den Fign. 4 und 5 dargestellten Kartuschen 80 können entweder eine separate Baugruppe bilden oder aber mit der Sensorbaugruppe 16 zu einer einzigen Baugruppe kombiniert werden. Bei der zuletzt genanten Realisierung ist keine separate Befestigungsanordnung für die Kartusche 80 erforderlich. Die Kartusche 80 kann vielmehr zusammen mit dem Gehäuse 42 der Sensorbaugruppe 16 am Hauptzylinder 12 montiert werden.

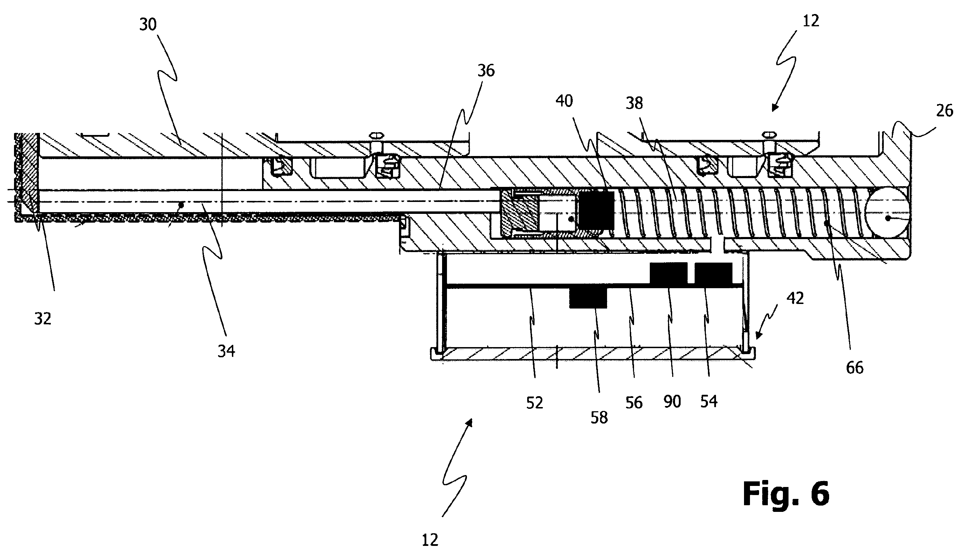

Fig. 6 zeigt ein weiteres Ausführungsbeispiel einer Hauptzylinderbaugruppe 10. Im Ausführungsbeispiel gemäß Fig. 6 umfasst die Sensorbaugruppe 16 zusätzlich zum Unterdrucksensor 54 und zum Wegsensor 56 einen Positionssensor 90.

Der Positionssensor 90 ermöglicht die Erfassung des Erreichens einer vorgegebenen Position des Signalgeberelements 40 (und damit des Betätigungskolbens 30). Der Positionssensor 90 kann beispielsweise Teil eines Bremslichtschalters (nicht dargestellt) und als binärer (schaltender) Hall-Sensor ausgelegt sein. Während der Wegsensor 56 ein analoges Signal bereitstellt, das einen Ausschnitt des Wegs des Betätigungskolbens 30 (und somit des Pedalwegs) repräsentiert, liefert der Positionssensor 90 ein ON/OFF-Signal, das für das Ein- und Ausschalten des Bremslichts herangezogen werden kann. Es ist jedoch auch möglich, unter Heranziehung des ON/OFF-Signals des Positionssensors 90 das analoge Signal des Wegsensors 56 zu kalibrieren, um so ein Pedalwegsignal mit ausreichender Genauigkeit nachzubilden. Aufgrund dieses Genauigkeitsgewinns kann der Pedalweg auf der Grundlage eines Signals des Wegsensors 56 ermittelt und ein Pedalwegsensor eingespart werden. Mittels der Kalibrierung lässt sich insbesondere die Temperaturabhängigkeit der Wegmessung deutlich reduzieren.

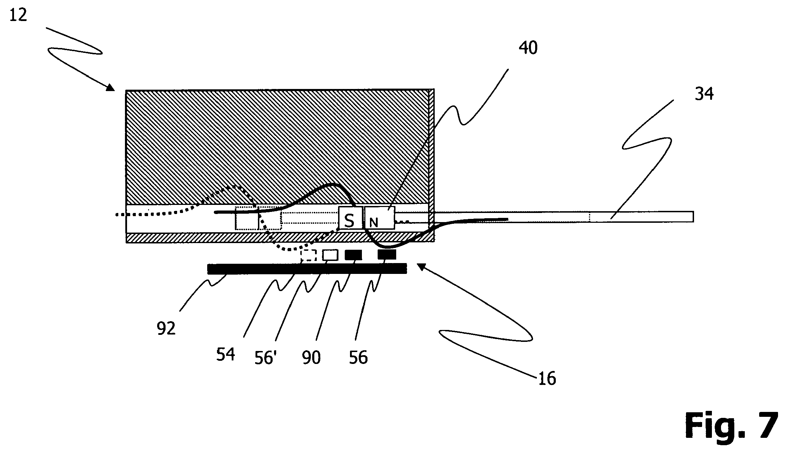

Im Ausführungsbeispiel gemäß Fig. 7 umfasst die Sensorbaugruppe 16 neben dem Unterdrucksensor 54 und zusätzlich zum Wegsensor 56 und Positionssensor 90 einen weiteren Wegsensor 56'. Wie unten erläutert wird, kann der Unterdrucksensor 54 in manchen Realisierungen entfallen, da der Unterdruck auch aus einem Modell auf der Grundlage des Wegsensorsignals berechnet werden kann.

Der Positionssensor 90 kann wiederum zwei Schaltzustände einnehmen und beispielsweise als binärer (schaltender) Hall-Sensor ausgelegt sein. Der Wegsensor 56 kann hingegen ein kontinuierlicher Hall-Sensor sein. In einer Implementierung umfasst der als binärer Hall-Sensor ausgelegte Positionssensor 90 einen kontinuierlichen Hall-Sensor und einen dem kontinuierlichen Hall-Sensor nachgeschalteten Komparator. Der Komparator unterzieht das Ausgangssignal des kontinuierlichen Hall-Sensors einer Schwellenwert-Entscheidung und gibt in Abhängigkeit der Entscheidung entweder eine logische "0" ("OFF)" oder eine logische "1" ("ON") aus.

Während der Wegsensor 56 somit ein analoges (kontinuierliches) Signal bereitstellt, das einen Ausschnitt des Wegs des Betätigungskolbens 30 (und somit des Pedalwegs) repräsentiert, liefert der Positionssensor 90 ein ON/OFF-Signal. Diese ON/OFF-Signal kann für das Ein- und Ausschalten des Bremslichts herangezogen werden kann. Zusätzlich oder alternativ hierzu ist jedoch auch möglich, unter Heranziehung des ON/OFF-Signals des Positionssensors 90 das analoge Signal des Wegsensors 56 zu kalibrieren, um so ein Pedalwegsignal mit ausreichender Genauigkeit nachzubilden.

Bei gewissen Anwendungen kann der Pedalweg auf der Grundlage eines Ausgangssignals des Wegsensors 56 ermittelt und ein separater Pedalwegsensor kann so eingespart werden. Die Pedalwegerfassung ist eine wesentliche Voraussetzung für die Implementierung einer elektrohydraulischen Bremsanlage, einer regenerativen Bremsanlage ("Hybrid-Bremsanlage") oder ähnlicher Konzepte. Daher kann die hier vorgestellte Sensorbaugruppe auch im Zusammenhang mit solchen Bremsanlagen zum Einsatz gelangen.

Im Folgenden werden unter Bezugnahme auf das Ausführungsbeispiel gemäß Fig. 7 beispielhafte Konzepte für die Wegerfassung sowie die Positionserfassung bei einem als Magnetelement ausgebildeten Signalgeberelement 40 erläutert. Wie bereits oben angemerkt, können prinzipiell jedoch auch solche Signalgeberelemente verwendet werden, die auf anderen physikalischen (z.B. optischen) Konzepten basieren.

Bei dem Ausführungsbeispiel gemäß Fig. 7 besteht der Hauptzylinder 12 aus einem nicht magnetischen Material wie Aluminium. Das Signalgeberelement 40 umfasst einen Dauermagneten aus beispielsweise einer Neodym-Eisen-Bor-Legierung. Die Magnetisierungsrichtung des Signalgeberelements 40 verläuft parallel zur translatorischen Bewegungsrichtung des Stößels 34 (wie in Fig. 7 durch den magnetischen Südpol "S" sowie den magnetischen Nordpol "N" veranschaulicht). In Fig. 7 ist der resultierende Verlauf der magnetischen Flussdichte in der Ausgangsstellung des Stößels 34 (durchgezogene Linie), also bei nicht betätigtem Bremspedal, sowie in der Endstellung des Stößels 34 (gepunktete Linie), also bei voll durchgetretenem Bremspedal veranschaulicht.

Unterhalb dieses Positionssensors 90, des Wegsensors 56 sowie des optionalen weiteren Wegsensors 56' ist ein Flussleitblech 92 aus einem weichmagnetischen Material von hoher magnetischer Permeabilität angeordnet. Das Flussleitblech 92 schirmt die Sensoren 56, 56', 90 vor äußeren Störfeldern ab und ermöglicht daher eine höhere Messgenauigkeit. Das Flussleitblech 92 kann beispielsweise aus µ-Metall gefertigt sein.

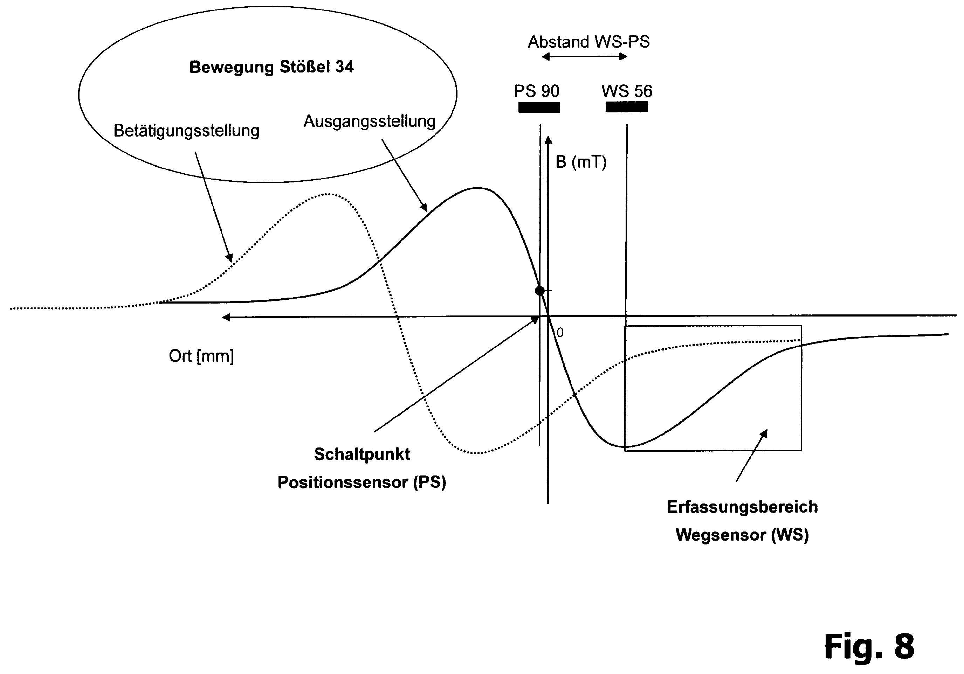

Die in Fig. 7 nur schematisch eingezeichneten Verläufe der magnetischen Flussdichte sind in dem Diagramm von Fig. 8 deutlicher dargestellt. Genauer gesagt veranschaulicht Fig. 8 den ortsabhängigen Verlauf der magnetischen Flussdichte B entlang einer parallel zum Stößel 34 verlaufenden und sowohl den Wegsensor 56 als auch den Positionssensor 90 enthaltenden Geraden. Die durchgezogene Linie veranschaulicht wie in Fig. 7 den Flussdichteverlauf in der Ausgangsstellung des Stößels 34 bei nicht betätigtem Bremspedal. Die gepunktete Linie kennzeichnet den Flussdichte-Verlauf in der Endstellung des Stößels 34, also bei voll durchgetretenem Bremspedal.

Deutlich zu erkennen ist die Tatsache, dass der Flussdichte-Verlauf zwei Maxima aufweist. Die beiden Maxima sind im Bereich der beiden Pole des magnetischen Signalgeberelements 40 angeordnet. Die Flussdichte besitzt im Abschnitt zwischen den beiden Maxima einen annähernd linearen Verlauf. Ferner weist die Flussdichte im Bereich jenseits der beiden Maxima jeweils einen asymptotisch monotonen Verlauf auf.

In Fig. 8 ist auch die Lage des Wegsensors 56 sowie des Positionssensors 90 bezüglich des Flussdichteverlaufs dargestellt. Deutlich zu erkennen ist der Sachverhalt, dass der Abstand zwischen dem Wegsensor 56 und dem Positionssensor 90 in Abhängigkeit einer Längenausdehnung des Signalgeberelements 40 gewählt ist. Genauer gesagt entspricht der Abstand zwischen dem Wegsensor 56 und dem Positionssensor 90 ungefähr der halben Länge des Signalgeberelements 40. Dieser Sachverhalt ist daran zu erkennen, dass der Wegsensor 56 in der Ausgangsstellung des Stößels 34 ungefähr im Bereich einer Flussdichtemaximums liegt, während der Positionssensor 90 in der Ausgangsstellung ungefähr im Bereich zwischen den beiden Flussdichtemaxima liegt.

Aus den oben erläuterten Lagen des Wegsensors 56 sowie des Positionssensors 90 bezüglich des Flussdichteverlaufs ergeben sich der in Fig. 8 eingezeichnete Schaltpunkt des Positionssensors 90 und Erfassungsbereich des Wegsensors 56. In der Ausgangsstellung des Stößels 34 befindet sich der Positionssensor 90 in demjenigen Flussdichteabschnitt, der einen steilen linearen Verlauf besitzt. Bereits eine geringfügige Bewegung des Stößels 34 aus seiner Ausgangsstellung heraus bewirkt daher eine starke Änderung der magnetischen Durchflutung des Positionssensors 90, was zu einer hohen Erfassungsgenauigkeit führt. Wie in Fig. 8 erkennbar, kann der Schaltpunkt des Positionssensors 90 daher sehr nahe am Wendepunkt des Flussdichteverlaufs positioniert werden.

Der Erfassungsbereich des Wegsensors 56 ist hingegen derart gewählt, dass er sich vom Ort der höchsten magnetischen Durchflutung (Flussdichtemaximum) in Richtung des asymptotisch monotonen Verlaufs erstreckt. Wird der Stößel 34 gegenüber seiner Ausgangsstellung in Richtung der Endstellung verschoben, entfernt sich das Signalgeberelement 40 vom Wegsensor 56, woraus eine monotone Abnahme der magnetischen Durchflutung des Wegsensors 56 (und ein entsprechender monotoner Verlauf eines Sensor-Ausgangssignals) resultiert. Die magnetische Flussdichte weist in dem in Fig. 8 veranschaulichten Erfassungsbereich einen weniger steilen Verlauf als in dem Bereich zwischen den beiden Flussdichtemaxima auf. Dies schmälert zwar zu einem gewissen Grad die Messgenauigkeit, jedoch zugunsten eines deutlich größeren Messbereichs mit sich monoton ändernder magnetischen Durchflutung.

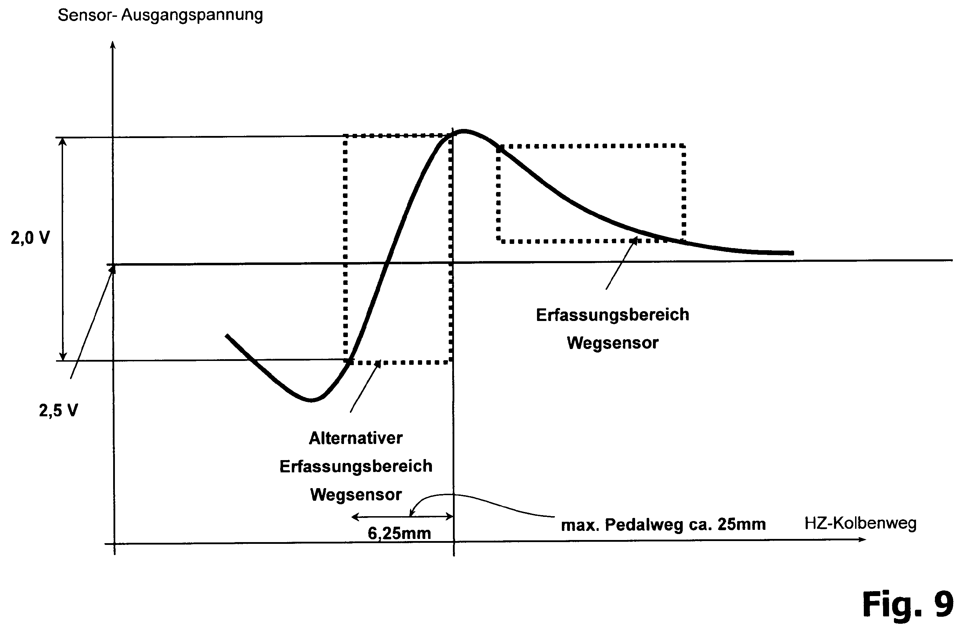

Fig. 9 veranschaulicht den Verlauf eines Ausgangsignals des Wegsensors 56, nämlich der Sensor-Ausgangsspannung, in Abhängigkeit des vom Stößel 34 und damit vom Betätigungskolben 30 des Hauptzylinders 12 zurückgelegten Weg. Der vom Betätigungskolben 30 zurückgelegte Weg ist direkt proportional zum Pedalweg, so dass sich aus dem vom Betätigungskolben 30 zurückgelegten Weg über einen Proportionalitätsfaktor der Pedalweg bestimmen lässt. Der vom Betätigungskolben 30 zurückgelegte Weg wiederum ist aus der Änderung der Sensor-Ausgangsspannung des Wegsensors 56 unter Zuhilfenahme des in Fig. 9 dargestellten Diagramms zu ermitteln.

In Fig. 9 sind sowohl der in Fig. 8 veranschaulichte Erfassungsbereich des Wegsensors 56 als auch ein alternativer Erfassungsbereich für den Wegsensor 56 eingezeichnet. Der alternative Erfassungsbereich ist zwischen den beiden Flussdichtemaxima angeordnet. Wie bereits oben erläutert, ermöglicht der alternative Erfassungsbereich eine höhere Genauigkeit der Wegerfassung, jedoch möglicherweise auf Kosten des maximal erfassbaren Wegs des Betätigungskolbens 30. Selbstverständlich könnte auch die in Fig. 8 veranschaulichte Lage des Positionssensors 90 geändert werden, beispielsweise wie in Fig. 8 für den Wegsensor 56 veranschaulicht.

Wie im Ausführungsbeispiel gemäß Fig. 7 gezeigt, kann zusätzlich zum Wegsensor 56 ein weiterer Wegsensor 56' vorgesehen sein, der bezüglich des Wegsensors 56 räumlich versetzt entlang der Bewegungsrichtung des Stößels 34 angeordnet ist. Der Wegsensor 56 ist im Bereich eines ersten Maximums des Flussdichteverlaufs und der weitere Sensor 56' im Bereich des zweiten Maximums vorgesehen. Die Erfassung und Auswertung der Ausgangssignale beider Wegsensoren 56, 56' erhöht die Genauigkeit der Wegerfassung. Darüber hinaus wird es möglich, die Ausgangssignale beider Wegsensoren 56, 56' gegeneinander zu plausibilisieren. Auf diese Weise kann der Ausfall eines Wegsensors 56, 56' erkannt werden. Ferner erhöht die Redundanz die Zuverlässigkeit der Sensorbaugruppe 12. Obwohl im Ausführungsbeispiel gemäß Fig. 7 nicht dargestellt, könnte in ähnlicher Weise ein redundanter Positionssensor vorgesehen werden.

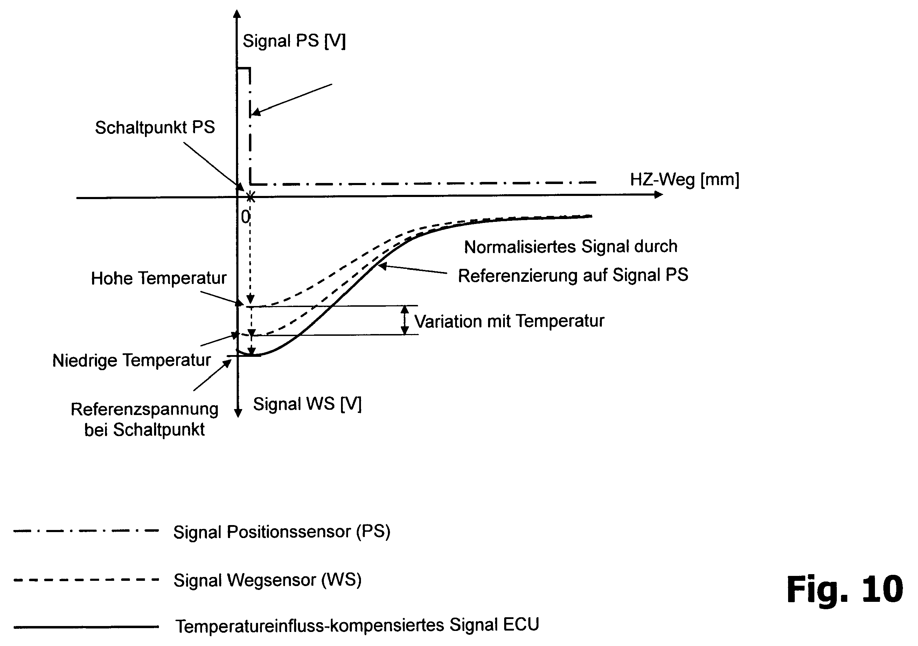

Im Folgenden wird unter Bezugnahme auf das Diagramm gemäß Fig. 10 die Kalibrierung des Wegsensors 56 auf der Grundlage eines Ausgangssignals des Positionssensors 90 erläutert. Mittels dieser Kalibrierung lässt sich insbesondere die Temperatur-Abhängigkeit der Wegmessung deutlich reduzieren.

Das Diagramm gemäß Fig. 10 veranschaulicht in der oberen Hälfte das Ausgangssignal (Ausgangsspannung) des Positionssensors 90 und in der unteren Hälfte das Ausgangssignal (Ausgangsspannung) des Wegsensors 56 in Abhängigkeit des von dem Betätigungskolben 30 aus seiner Ausgangsstellung heraus zurückgelegten Wegs. Wie in Fig. 10 gezeigt, zeigt das Ausgangssignal des Positionssensors 90 den erwarteten binären Verlauf mit einem Sprung des Signalpegels an einem vordefinierten Schaltpunkt. In der Praxis hat sich herausgestellt, dass die Lage des Schaltpunkts keine signifikante Temperatur-Abhängigkeit aufweist.

Der in der unteren Hälfte des Diagramms der Fig. 10 dargestellte Verlauf des Ausgangssignals des Wegsensors 56 zeigt den erwarteten kontinuierlichen Verlauf in Übereinstimmung mit der kontinuierlichen Änderung der magnetischen Durchflutung des Wegsensors 56. Deutlich zu erkennen ist die starke Abhängigkeit des Verlaufs des Ausgangssignals des Wegsensors 56 von der Temperatur.

Um die Temperatur-Abhängigkeit des Ausgangssignals des Wegsensors 56 zu kompensieren, wird ein Kalibrieren dieses Ausgangssignals auf der Grundlage des im Wesentlichen temperaturunabhängigen Schaltpunkts des Positionssensors 90 vorgeschlagen. Genauer gesagt wird bei Erfassen des Schaltpunkts des Positionssensors 90 das Ausgangssignal des Wegsensors 56 auf ein Referenzsignal bezogen. In diesem Zusammenhang wird ein Verstärkungsfaktor für das Ausgangssignal des Wegsensors 56 derart eingestellt, dass sich stets das in Fig. 10 als durchgezogene Linie darstellte normalisierte Signal (Referenzsignal) ergibt. Die Einstellung des Verstärkungsfaktors sowie die Signalverstärkung kann in einer ECU durchgeführt werden, um ein Temperatureinfluss-kompensiertes Signal zu erhalten. Die Kalibrierung kann bei jeder Betätigung des Bremspedals erneut durchgeführt werden.

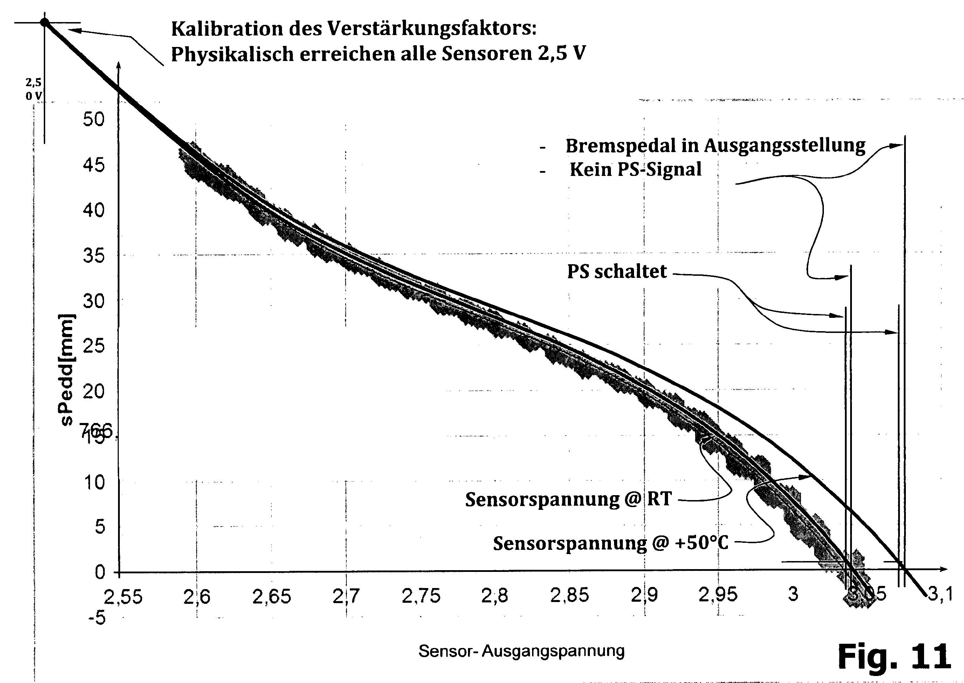

Fig. 11 zeigt in einem weiteren Diagramm den Verlauf der Sensor-Ausgangsspannung des Wegsensors 56 in Abhängigkeit vom Pedalweg bei Raumtemperatur sowie bei einer Temperatur von 50° C. Deutlich zu erkennen ist erneut die starke Temperatur-Abhängigkeit des Sensor-Ausgangssignals. Ebenfalls eingezeichnet in Fig. 11 ist der Schaltpunkt des Positionssensors 90. Dieser Schaltpunkt, der in Bezug auf die Ausgangsstellung des Stößels 34 bzw. des Betätigungskolbens 30 definiert ist, weist praktisch keine Temperaturabhängigkeit auf und eignet sich daher als Referenzpunkt für die Kalibrierung des Wegsensors 56. Wie in Fig. 11 ebenfalls zu erkennen, nähert sich das Ausgangssignal des als Hall-Sensor ausgebildeten Wegsensors 56 mit zunehmendem Pedalweg dem asymptotischen Wert 2,5 V. Diese Tatsache ermöglicht die Kalibration des Wegsensors 56 auf der Grundlage der oben erläuterten Wahl des Verstärkungsfaktors.

Gemäß einer Weiterbildung der Ausführungsbeispiele kann das Ausgangssignal des Positionssensors 90 auf der Grundlage eines anderen, auf einen Bremsvorgang hinweisenden Signals plausibilisiert werden. Wir beispielsweise auf der Grundlage eines Ausgangssignals eines Radrehzahlsensors oder eines Längsbeschleunigungssensors eine Bremsvorgang erkannt, ohne dass der Positionssensor 90 seinen Schaltzustand ändert, so kann auf einen Fehlerfall geschlossen werden.

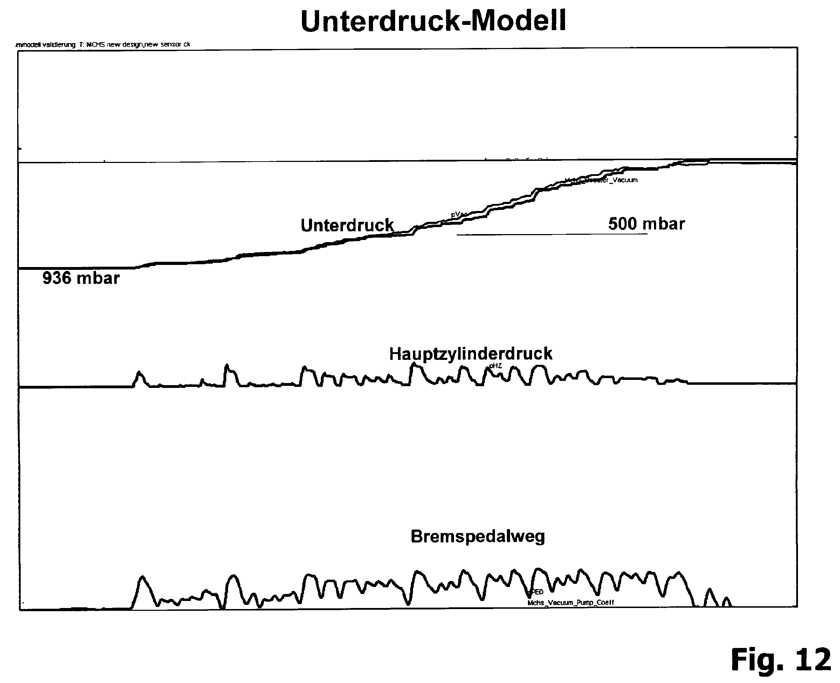

Fig. 12 erläutert den Zusammenhang zwischen dem Bremspedalweg, wie er beispielsweise auf der Grundlage des Ausgangssignals des Wegsensors 56 bestimmt werden kann, und des Unterdrucks in der Unterdruckkammer 20 des Bremskraftverstärkers 14 (vgl. Fig. 1). Es hat sich herausgestellt, dass mittels eines mathematischen Modells der in Fig. 12 dargestellte Unterdruck mit dem ebenfalls in Fig. 12 dargestellten Bremspedalweg in eine Beziehung gebracht werden kann. Mittels dieses Modells lässt sich somit auf der Grundlage des Ausgangssignals des Wegsensors 56 der im Bremskraftverstärker 14 herrschende Unterdruck ermitteln. Auf den beispielsweise in Fig. 2 dargestellten Unterdrucksensor kann daher bei gewissen Ausführungsbeispielen verzichtet werden. Ebenfalls verzichten lässt sich in manchen Ausführungsbeispielen auf einen separaten Pedalwegsensor, der in anderen Ausführungsbeispielen zusätzlich zum Wegsensor 56 vorgesehen sein kann.

Wie sich aus den Ausführungsbeispielen ergibt, ermöglicht das hier vorgestellte Sensorbaugruppenkonzept eine vereinfachte Montage der Sensoren am Hauptzylinder. Verschiedenste Sensoren (optionaler Unterdrucksensor zur Systemausfallerkennung, Wegsensor z.B. zur Pedalwegermittlung, Positionssensor z.B. für Bremslichtschalter, usw.) können in ein einziges Gehäuse integriert werden, welches auf einfache Weise außen am Hauptzylinder angebracht werden kann. Die Sensorsignale können über einen gemeinsamen elektrischen Anschluss ausgelesen und untereinander plausibilisiert bzw. kalibriert werden.

## Patentansprüche

1. Sensorbaugruppe (16) zur Verwendung mit einem Hauptzylinder (12), der ein eingangsseitiges Betätigungselement (30) und einen Unterdruckbereich (36, 38) zur Kommunikation mit einem Unterdruck-Bremskraftverstärker (14) aufweist, wobei die Sensorbaugruppe (16) das Folgende umfasst:
einen Unterdrucksensor (54) zur Erfassung eines Unterdrucks im Unterdruckbereich (36, 38) des Hauptzylinders (12);
wenigstens einen weiteren Sensor (56, 90) zur Erfassung eines mit dem Betätigungselement (30) des Hauptzylinders (12) starr gekoppelten Signalgebers (40); und
ein Gehäuse (42), welches den Unterdrucksensor (54) und den wenigstens einen weiteren Sensor (56, 90) aufnimmt, wobei das Gehäuse (42) eine Gehäuseöffnung (60), die eine Kommunikation des Unterdrucksensors (54) mit dem Unterdruckbereich (36, 38) des Hauptzylinders (12) gestattet, und eine Befestigungsanordnung zur Montage des Gehäuses (42) außenseitig am Hauptzylinder (12) besitzt.

2. Sensorbaugruppe nach Anspruch 1, wobei das Gehäuse (42) den Unterdrucksensor (54) und den wenigstens einen weiteren Sensor (56, 90) zumindest auf einer Oberseite umgibt und wobei die Gehäuseöffnung (60) auf einer an den Hauptzylinder (12) angrenzenden Unterseite (56) des Gehäuses (42) ausgebildet ist.

3. Sensorbaugruppe nach Anspruch 1 oder 2, ferner umfassend ein Dichtelement (44) zum Abdichten der Gehäuseöffnung (60) gegenüber dem Hauptzylinder (12).

4. Sensorbaugruppe nach einem der vorhergehenden Ansprüche, wobei der wenigstens eine weitere Sensor ein Wegsensor (56) zur Erfassung eines vom Betätigungselement (30) zurückgelegten Weges ist.

5. Sensorbaugruppe nach einem der vorhergehenden Ansprüche, wobei der wenigstens eine weitere Sensor ein Positionssensor (90) zur Erfassung des Erreichens einer vorgegebenen Position des Betätigungselements (30) ist, wobei der Positionssensor (90) vorzugsweise Teil eines Bremslichtschalters ist.

6. Sensorbaugruppe nach den Ansprüchen 4 und 5, wobei der Wegsensor (56) und der Positionssensor (90) vorgesehen sind und der Wegsensor (56) auf der Grundlage eines Ausgangssignals des Positionssensors (90) kalibrierbar ausgebildet ist.

7. Sensorbaugruppe nach einem der Ansprüche 4 bis 6, wobei der Wegsensor (56) ein analoges Signal bereitstellt und insbesondere als kontinuierlicher Hall-Sensor und/oder wobei der Positionssensor (90) ein binäres Signal bereitstellt und insbesondere als binärer Hall-Sensor ausgebildet ist.

8. Sensorbaugruppe nach zumindest den Ansprüchen 4 und 5, wobei der Wegsensor (56) und der Positionssensor (90) einen Abstand voneinander aufweisen und der Abstand in Abhängigkeit einer Längenausdehnung des Signalgebers (40) gewählt ist, wobei der Abstand zwischen dem Wegsensor (56) und dem Positionssensor (90) vorzugsweise ungefähr der halben Länge des Signalgeberelements (40) entspricht.

9. Sensorbaugruppe nach einem der Ansprüche 4 bis 8, wobei der Wegsensor (56) und/oder der Positionssensor (90) dazu ausgebildet ist/sind, eine magnetische Flussdichte zu erfassen, wobei der Wegsensor (56) vorzugsweise derart platziert ist, dass der Wegsensor (56) in einer Ausgangsstellung des Betätigungselements (30) ungefähr in einem Bereich eines ersten Flussdichtemaximums liegt.

10. Sensorbaugruppe nach Anspruch 9, wobei der Positionssensor (90) derart platziert ist, dass der Positionssensor (90) in einer Ausgangsstellung des Betätigungselements (30) ungefähr in einem Bereich zwischen zwei Flussdichtemaxima liegt.

11. Sensorbaugruppe nach einem der vorhergehenden Ansprüche, ferner umfassend einen Kanal (82) zur Aufnahme eines mit dem Betätigungselements (30) des Hauptzylinders (12) gekoppelten Stößels (34), wobei der Stößel (34) das Signalgeberelement (40) trägt, und wobei der Unterdrucksensor (54) vorzugsweise über den Kanal (82) mit dem Unterdruckbereich (32) des Hauptzylinders (12) kommuniziert.

12. Hauptzylinderbaugruppe (10), umfassend
einen Hauptzylinder (12), der ein eingangsseitiges Betätigungselement (30) und einen Unterdruckbereich (36, 38) zur Kommunikation mit einem Unterdruck-Bremskraftverstärker (14) aufweist; und
eine Sensorbaugruppe (16) nach einem der vorhergehenden Ansprüche.

13. Hauptzylinderbaugruppe nach Anspruch 12, ferner umfassend einen mit dem Betätigungselement (30) des Hauptzylinders (12) gekoppelten Stößel (34), wobei der Stößel (34) das Signalgeberelement (40) trägt, und vorzugsweise ferner umfassend einen am Hauptzylinder (12) ausgebildeten, optionalen Kanal (36) zur Aufnahme des Stößels (34), wobei der Kanal (36) zum Unterdruckbereich (36, 38) des Hauptzylinders (12) gehört und angeordnet ist, um eine Unterdruckkammer (20) des Unterdruck-Bremskraftverstärkers (14) mit der Gehäuseöffnung (60) zu verbinden.

14. Verwendung einer Sensorbaugruppe nach zumindest Anspruch 4 zum Simulieren eines Signals eines Pedalwegsensors auf der Grundlage eines Ausgangssignals des Wegsensors (56).

15. Verwendung einer Sensorbaugruppe nach zumindest den Ansprüchen 4und 5 zum Kalibrieren des Wegsensors (56) auf der Grundlage eines Ausgangssignals des Positionssensors (90), wobei das Kalibrieren vorzugsweise bei Erfassen des Erreichens der vorgegebenen Position erfolgt, wobei bei Erreichen der vorgegebenen Position das Ausgangssignal des Wegsensors (56) vorzugsweise auf ein Referenzsignal bezogen wird.

## Claims

1. Sensor assembly (16) for use with a master cylinder (12) having an input side actuation element (30) and a negative pressure region (36, 38) for communicating with a negative pressure brake booster (14), the sensor assembly (16) comprising the following:
a negative pressure sensor (54) for detecting a negative pressure in the negative pressure region (36, 38) of the master cylinder (12);
at least one additional sensor (56, 90) for detecting a signal transmitter (40) which is rigidly coupled to the actuation element (30) of the master cylinder (12); and
a housing (42) which receives the negative pressure sensor (54) and the at least one additional sensor (56, 90), the housing (42) having a housing opening (60) which allows the negative pressure sensor (54) to communicate with the negative pressure region (36, 38) of the master cylinder (12), and a fastening arrangement for attaching the housing (42) to the outer side of the master cylinder (12).

2. Sensor assembly according to claim 1, the housing (42) surrounding the negative pressure sensor (54) and the at least one additional sensor (56, 90) at least at an upper side and the housing opening (60) being formed at a lower side (56) of the housing (42) adjacent to the master cylinder (12).

3. Sensor assembly according to claim 1 or 2, further comprising a sealing element (44) for sealing the housing opening (60) with respect to the master cylinder (12).

4. Sensor assembly according to one of the preceding claims, the at least one additional sensor being a displacement sensor (56) for detecting a path travelled by the actuation element (30).

5. Sensor assembly according to one of the preceding claims, the at least one additional sensor being a position sensor (90) for detecting the reaching of a predetermined position of the actuation element (30), the position sensor (90) preferably being part of a brake light switch.

6. Sensor assembly according to claims 4 and 5, the displacement sensor (56) and the position sensor (90) being provided and the displacement sensor (56) being adapted so as to be calibrateable on the basis of an output signal of the position sensor (90).

7. Sensor assembly according to one of claims 4 to 6, the displacement sensor (56) providing an analogue signal and being constructed in particular as a continuous Hall sensor and/or the position sensor (90) providing a binary signal and being constructed in particular as a binary Hall sensor.

8. Sensor assembly according to at least claims 4 and 5, the displacement sensor (56) and the position sensor (90) being spaced from one another and the spacing being selected dependent on a longitudinal extent of the signal transmitter (40), the spacing between the displacement sensor (56) and the position sensor (90) preferably corresponding to approximately half of the length of the signal transmitter element (40).

9. Sensor assembly according to one of claims 4 to 8, the displacement sensor (56) and/or the position sensor (90) being constructed to detect a magnetic flux density, the displacement sensor (56) preferably being positioned in such a manner that, in an initial position of the actuation element (30), the displacement sensor (56) is located approximately in a region of a first flux density maximum.

10. Sensor assembly according to claim 9, the position sensor (90) being positioned in such a manner that, in an initial position of the actuation element (30), the position sensor (90) is located approximately in a region between two flux density maxima.

11. Sensor assembly according to one of the preceding claims, further comprising a channel (82) for receiving a tappet (34) which is coupled to the actuation element (30) of the master cylinder (12), the tappet (34) carrying the signal transmitter element (40), and the negative pressure sensor (54) preferably communicating with the negative pressure region (32) of the master cylinder (12) via the channel (82).

12. Master cylinder assembly (10) comprising
a master cylinder (12) having an input side actuation element (30) and a negative pressure region (36, 38) for communicating with a negative pressure brake booster (14); and
a sensor assembly (16) according to one of the preceding claims.

13. Master cylinder assembly according to claim 12, further comprising a tappet (34) which, is coupled to the actuation element (30) of the master cylinder (12), the tappet (34) carrying the signal transmitter element (40), and preferably further comprising an optional channel (36) which is formed on the master cylinder (12) for receiving the tappet (34), the channel (36) belonging to the negative pressure region (36, 38) of the master cylinder (12) and being arranged in order to connect a negative pressure chamber (20) of the negative pressure brake booster (14) to the housing opening (60).

14. Use of a sensor assembly according to at least claim 4 for simulating a signal of a pedal displacement sensor on the basis of an output signal of the displacement sensor (56).

15. Use of a sensor assembly according to at least claims 4 and 5 for calibrating the displacement sensor (56) on the basis of an output signal of the position sensor (90), the calibrating preferably being carried out when detecting the reaching of the predetermined position, wherein the output signal of the displacement sensor (56) is preferably referred to a reference signal when reaching the predetermined position.

## Revendications

1. Bloc détecteur (16) destiné à être utilisé avec un maître-cylindre (12) qui présente un élément d'actionnement (30) côté entrée et une zone de dépression (36, 38) pour la communication avec un servofrein à dépression (14), le bloc détecteur (16) comprenant :
un capteur de dépression (54) pour détecter une dépression dans la zone de dépression (36, 38) du maître-cylindre (12) ;
au moins un autre capteur (56, 90) pour détecter un transmetteur de signaux (40) couplé rigidement à l'élément d'actionnement (30) du maître-cylindre (12) ; et
un boîtier (42) qui reçoit le capteur de dépression (54) et ledit au moins un autre capteur (56, 90), le boîtier (42) possédant une ouverture de boîtier (60) qui permet une communication du capteur de dépression (54) avec la zone de dépression (36, 38) du maître-cylindre (12), et un dispositif de fixation pour le montage du boîtier (42) côté extérieur sur le maître-cylindre (12).

2. Bloc détecteur selon la revendication 1, dans lequel le boîtier (42) entoure le capteur de dépression (54) et ledit au moins un autre capteur (56, 90) au moins sur une face supérieure et dans lequel l'ouverture de boîtier (60) est agencée sur une face inférieure (56) du boîtier (42) adjacente au maître-cylindre (12).

3. Bloc détecteur selon la revendication 1 ou 2, comprenant en outre un élément d'étanchéité (44) pour rendre l'ouverture de boîtier (60) étanche par rapport au maître-cylindre (12).

4. Bloc détecteur selon l'une des revendications précédentes, dans lequel ledit au moins un autre capteur est un capteur de déplacement (56) pour détecter une distance parcourue par l'élément d'actionnement (30).

5. Bloc détecteur selon l'une des revendications précédentes, dans lequel ledit au moins un autre capteur est un capteur de position (90) pour détecter l'arrivée à une position prédéterminée de l'élément d'actionnement (30), le capteur de position (90) faisant de préférence partie d'un contacteur de feux stop.

6. Bloc détecteur selon les revendications 4 et 5, dans lequel le capteur de déplacement (56) et le capteur de position (90) sont prévus et le capteur de déplacement (56) est agencé pour pouvoir être étalonné sur la base d'un signal de sortie du capteur de position (90).

7. Bloc détecteur selon l'une des revendications 4 à 6, dans lequel le capteur de déplacement (56) fournit un signal analogique et est notamment réalisé sous la forme d'un capteur à effet Hall continu et/ou dans lequel le capteur de position (90) fournit un signal binaire et est notamment réalisé sous la forme d'un capteur à effet Hall binaire.

8. Bloc détecteur selon au moins les revendications 4 et 5, dans lequel le capteur de déplacement (56) et le capteur de position (90) présentent une distance l'un de l'autre et la distance est choisie en fonction d'une extension longitudinale du transmetteur de signaux (40), la distance entre le capteur de déplacement (56) et le capteur de position (90) correspondant de préférence environ à la moitié de la longueur de l'élément transmetteur de signaux (40).

9. Bloc détecteur selon l'une des revendications 4 à 8, dans lequel le capteur de déplacement (56) et/ou le capteur de position (90) est/sont agencé(s) pour détecter une induction magnétique, le capteur de déplacement (56) étant de préférence placé de telle façon que le capteur de déplacement (56) se trouve, dans une position initiale de l'élément d'actionnement (30), approximativement dans une zone d'un premier maximum d'induction.

10. Bloc détecteur selon la revendication 9, dans lequel le capteur de position (90) est placé de telle façon que le capteur de position (90) se trouve, dans une position initiale de l'élément d'actionnement (30), approximativement dans une zone comprise entre deux maxima d'induction.

11. Bloc détecteur selon l'une des revendications précédentes, comprenant en outre un canal (82) pour recevoir un poussoir (34) couplé à l'élément d'actionnement (30) du maître-cylindre (12), le poussoir (34) portant l'élément transmetteur de signaux (40), et le capteur de dépression (54) communiquant de préférence avec la zone de dépression (32) du maître-cylindre (12) par l'intermédiaire du canal (82).

12. Bloc maître-cylindre (10), comprenant
un maître-cylindre (12) qui présente un élément d'actionnement (30) côté entrée et une zone de dépression (36, 38) pour la communication avec un servofrein à dépression (14) ; et
un bloc détecteur (16) selon l'une des revendications précédentes.

13. Bloc maître-cylindre selon la revendication 12, comprenant en outre un poussoir (34) couplé à l'élément d'actionnement (30) du maître-cylindre (12), le poussoir (34) portant l'élément transmetteur de signaux (40), et comprenant en outre de préférence un canal (36) optionnel formé sur le maître-cylindre (12) pour recevoir le poussoir (34), le canal (36) faisant partie de la zone de dépression (36, 38) du maître-cylindre (12) et étant disposé pour relier une chambre à dépression (20) du servofrein à dépression (14) à l'ouverture de boîtier (60).

14. Utilisation d'un bloc détecteur selon au moins la revendication 4 pour simuler un signal d'un capteur de position d'accélérateur sur la base d'un signal de sortie du capteur de déplacement (56).

15. Utilisation d'un bloc détecteur selon au moins les revendications 4 et 5 pour étalonner le capteur de déplacement (56) sur la base d'un signal de sortie du capteur de position (90), l'étalonnage étant de préférence réalisé lors de la détection de l'arrivée à la position prédéfinie, le signal de sortie du capteur de déplacement (56) étant de préférence rapporté à un signal de référence lors de l'arrivée à la position prédéfinie.
